# EUROPÄISCHE PATENTANMELDUNG

(11) **EP 4 714 683 A1**
(43) Veröffentlichungstag der Anmeldung: **25.03.2026**
(21) Anmeldenummer: 25195603.3
(22) Anmeldetag: 13.08.2025
(51) Int. Cl.: B60C 11/12, B60C 11/03

(54) **FAHRZEUGREIFEN**

(30) Priorität: 19.09.2024 DE 102024209017
(71) Anmelder: Continental Reifen Deutschland GmbH, 30175 Hannover (DE)
(72) Erfinder: Berger, Christoph, 30175 Hannover (DE); Seng, Matthias, 30175 Hannover (DE); Wiese, Klaus, 30175 Hannover (DE)
(74) Vertreter: Continental Corporation

(57) **Zusammenfassung**

Fahrzeugreifen mit einem Laufstreifen mit einem oder mehreren in Umfangsrichtung umlaufenden und Profilpositive aufweisenden Umfangsbereich(en), wobei jedem Bereich Pitches (P₁, P₂, P₃) mit zumindest einer längeren und zumindest einer gegenüber dieser unterschiedlichen kürzeren Umfangslänge (l₁, l₂, l₃) zugeordnet sind,
wobei die Profilpositive jeweils mit mehreren Einschnitten (4, 5, 6) versehen sind, welche mit einer kleinsten Breite (b₁), zumindest einer mittleren Breite (b₂) und mit einer größten Breite (b₃), jeweils aus einem Breitenbereich von 0,30 mm bis 1,50 mm, vorhanden sind.

In Pitches (P₃) mit einer längeren Umfangslänge (l₃) sind Profilpositive vorhanden, die Einschnitte (4, 5, 6) mit der kleinsten oder einer/der mittleren Breite (b₁, b₂) enthalten und in Pitches (P₁) mit einer gegenüber der längeren Umfangslänge kürzeren Umfangslänge (l₁) sind Profilpositive vorhanden, die Einschnitte (4, 5, 6) mit der größten oder einer/der mittleren Breite (b₂, b₃) enthalten.

## Beschreibung

Die Erfindung betrifft einen Fahrzeugreifen mit einem Laufstreifen mit einem oder mehreren in Umfangsrichtung umlaufenden und Profilpositive aufweisenden Umfangsbereich(en), beispielsweise mit Profilblöcken oder blockartigen Strukturen, wobei jedem Umfangsbereich Pitches mit zumindest einer längeren und zumindest einer gegenüber dieser unterschiedlichen kürzeren Umfangslänge zugeordnet sind, wobei die Pitches über den Reifenumfang gemäß einer Pitchfolge aufeinanderfolgen, welche rechnerisch ermittelt wird,
wobei die Profilpositive jeweils mit mehreren Einschnitten, die sich zur axialen Richtung unter einem Winkel ≤ 45° erstrecken, versehen sind,
wobei die Einschnitte mit einer kleinsten Breite, zumindest einer mittleren Breite und mit einer größten Breite, jeweils aus einem Breitenbereich von 0,30 mm bis 1,50 mm, vorhanden sind.

Bei Fahrzeugreifen, die für den Einsatz unter winterlichen Fahrbedingungen, auf Schnee oder Eis, geeignet und vorgesehen sind, ist es üblich, den Laufstreifen mit einer großen Anzahl von Einschnitten zu versehen, um gute Griffeigenschaften auf Eis und Schnee sicherzustellen. Die Profilpositive, beispielsweise Profilblöcke, sind ferner zur Reduzierung bzw. zur günstigen Beeinflussung des Abrollgeräusches üblicherweise in über den Reifenumfang aufeinanderfolgenden, gleichartigen Profilabschnitten, den sogenannten Pitches, angeordnet, welche in unterschiedlichen, vorzugsweise drei bis fünf unterschiedlichen Umfangslängen vorgesehen sind, wobei die Längenverhältnisse der Pitches vorab festgelegt wird und rechnerisch die jeweils günstigste Aufeinanderfolge der Pitches über den Reifenumfang, die Pitchfolge, ermittelt wird.

Ein Fahrzeugreifen der eingangs genannten Art, welcher insbesondere ein PKW-Winterreifen ist, ist aus der DE 10032372 A1 bekannt. In den Profilpositiven, welche zu Pitches größerer Umfangslängen gehören, sind Einschnitte mit einer größeren Breite vorgesehen als in Profilpositiven, welche zu Pitches geringerer Umfangslänge gehören. Dadurch soll die Steifigkeit der Profilpositive bzw. Profilblöcke im Laufstreifen derart beeinflusst werden, dass die Schnee- und Eisperformance verbessert sind.

Bei der Entwicklung von Winter- und Ganzjahresreifen ist es üblich, Versuchsreifen unter winterlichen Fahrbedingungen, also auf Eis und/oder Schnee zu testen. Dabei wird versucht, möglichst konstante Streckenbedingungen zur Verfügung zu haben, um eine Vergleichbarkeit zwischen den Ergebnissen zu erzielen. Die Laufstreifen der Winter- und Ganzjahresreifen werden möglichst gut auf diese bekannten Testbedingungen abgestimmt gestaltet. Vor allem die gewählten Breiten der Einschnitte richten sich nach diesen Prüfbedingungen. Untersuchungen und Beobachtungen haben gezeigt, dass beispielsweise die Schneebeschaffenheit und das daraus resultierende Traktions- und Bremsvermögen von Winter- und Ganzjahresreifen sehr stark vom Wassergehalt des Schnees, von der Umgebungstemperatur, der Schneehärte, der Schneedichte, der Kornbeschaffenheit des Schnees und vielen weiteren Parametern abhängig ist. Im realen Straßenverkehr kann sich der Nutzer der Reifen jedoch seine Streckenbedingungen nicht aussuchen. Wird nun die Breite der Einschnitte in bekannter Weise auf die erwähnten Tests mit Versuchsreifen abgestimmt, kann es dazu kommen, dass im realen Fahrbetrieb derartig gestaltete Reifen die auftretenden Schnee- und Eisbedingungen nicht ausreichend abdecken und damit das Kraftschlusspotential der Laufstreifens nicht voll ausgeschöpft wird.

Der Erfindung liegt somit die Aufgabe zugrunde, eine Lösung für das aufgezeigte Problem aufzufinden und den Laufstreifen eines Fahrzeugreifens der eingangs genannten Art derart zu gestalten, dass auch bei unterschiedlichsten winterlichen Untergrund - und Streckenbedingungen verbesserte Traktions- und Bremsvermögen gewährleistet sind.

Gelöst wird die gestellte Aufgabe erfindungsgemäß dadurch, dass in Pitches mit einer längeren Umfangslänge Profilpositive vorhanden sind, die zumindest einen Einschnitt mit der kleinsten oder einer/der mittleren Breite (b₁, b₂) enthalten und in Pitches mit einer gegenüber der längeren Umfangslänge kürzeren Umfangslänge Profilpositive vorhanden sind, die zumindest einen Einschnitt mit der größten oder einer/der mittleren Breite enthalten.

Bei gemäß der Erfindung gestalteten Fahrzeugreifen sind im Laufstreifen Einschnitte unterschiedlicher Breiten auf besonders variable Weise eingesetzt und enthalten, ohne auf die Pitchlängen und die Pitchfolge, wie es beim Stand der Technik der Fall ist, abgestimmt zu sein. Variationen der Einschnittbreiten erfolgen unabhängig von den Umfangslängen der Pitches. Bei unterschiedlichen Strecken- und Witterungsbedingungen kann daher sichergestellt werden, dass beim Abrollen des Fahrzeugreifens am Untergrund immer ein gewisser Anteil der Einschnitte im Laufstreifen bei Kontakt mit dem Untergrund eine für die jeweils vorliegenden Untergrund- bzw. Streckenbedingungen ideale bzw. nahezu ideale Einschnittbreiten aufweist. Daraus ergibt sich für unterschiedlichste Untergrund- bzw. Streckenbedingungen ein besonders stabiles Leistungsspektrum der Winter- und Ganzjahresreifen.

Eine Vielzahl von Ausführungsvarianten gestattet es, Einschnitte unterschiedlicher Breiten in Profilpositiven unterschiedlicher Umfangslängen besonders vorteilhaft und variabel zu positionieren.

Bevorzugt ist eine Ausführungsvariante, bei welcher wobei Profilpositive, die Pitches gleicher Umfangslänge zugeordnet sind, jeweils eine übereinstimmende Anzahl von Einschnitten enthalten.

Bei einer weiteren Ausführungsvariante sind in Pitches mit der längsten Umfangslänge Profilpositive vorhanden, die Einschnitte mit der kleinsten Breite enthalten und in Pitches mit der kürzesten Umfangslänge sind Profilpositive vorhanden, die Einschnitte mit der größten Breite enthalten.

Besonders vorteilhaft ist es ferner, wenn in Pitches mit einer bestimmten Umfangslänge Profilpositive vorhanden sind, welche ausschließlich Einschnitte mit der kleinsten Breite, mit der oder einer mittleren Breite oder mit der größten Breite aufweisen. Besonders vorteilhaft ist auch die Alternative, bei welcher Profilpositive innerhalb von Pitches mit einer bestimmten Umfangslänge ausschließlich Einschnitte mit der kleinsten Breite oder einer mittleren Breite oder mit der größten Breite aufweisen.

Um beim Abrollen des Reifens auf Schnee oder Eis auf besonders effektive Weise in Umfangsrichtung sich wiederholende Profilstrukturen mit Einschnitten verschiedener Breiten zur Verfügung zu stellen, ist es zudem von Vorteil, wenn ein Profilpositiv oder mehrere Profilpositive, die ausschließlich Einschnitte einer bestimmten Breite enthalten, ein dieser Einschnittbreite zugeordnetes Einschnittpitch bilden, wobei die Aufeinanderfolge der unterschiedlichen Einschnittpitches im bzw. in jedem Umfangsbereich des Laufstreifens gemäß einer Einschnittpitchfolge erfolgt, die von der Pitchfolge der Pitches unabhängig ist, sich daher von der Pitchfolge der Pitches unterscheidet und diese Pitchfolge quasi überlagert.

Es gibt weitere Ausführungsvarianten, die sicherstellen, dass der Fahrzeugreifen mit Einschnitten unterschiedlicher Breiten auf besonders vorteilhafte Weise mit dem Untergrund in Kontakt kommt, um unterschiedlichsten winterlichen Untergrund- bzw. Streckenbedingungen gerecht zu werden. Bei einer dieser vorteilhaften Ausführungsvarianten weist der Laufstreifen einen einzigen, über die Breite des Laufstreifens verlaufenden Umfangsbereich auf, wobei die Profilpositive in jeder Laufstreifenhälfte jeweils Einschnittpitches bilden, wobei die Einschnittpitches in den beiden Laufstreifenhälften über den Umfang des Laufstreifens jeweils gemäß einer Einschnittpitchfolge aufeinanderfolgen. Die in den beiden Laufstreifenhälften vorhandenen Einschnittpitchfolgen können bevorzugt voneinander verschieden sein, alternativ können die in den beiden Laufstreifenhälften vorhandenen Einschnittpitchfolgen gleich sein, wobei dann die Einschnittpitchfolge in der einen Laufstreifenhälfte gegenüber jener in der anderen Laufstreifenhälfte in Umfangsrichtung versetzt ist.

Von besonderem Vorteil sind Ausführungsvarianten, bei welchen der Laufstreifen mehrere in Umfangsrichtung umlaufende Umfangsbereiche aufweist, da solche Umfangsbereiche eine besonders variable Ausgestaltung des Laufstreifens mit Einschnitten unterschiedlicher Breiten und unterschiedlicher Einschnittpitchfolgen gestatten. Bei einer dieser Varianten sind mehrere in Umfangsrichtung umlaufende Umfangsbereiche vorgesehen, in welche in Umfangsrichtung unmittelbar aufeinanderfolgende Profilpositive jeweils eine Blockspur bzw. eine Profilblockreihe bilden, wobei der Laufstreifen zumindest zwei Blockspuren aufweist, wobei in jeder Blockspur eine Einschnittpitchfolge vorhanden ist, die sich von sämtlichen Einschnittpitchfolgen in den anderen Blockspuren unterscheidet.

Dabei ist es zusätzlich von Vorteil, wenn zumindest zwei der Umfangsbereiche, insbesondere sämtliche Umfangsbereiche, jeweils eine eigene, separate Pitchfolge aus zumindest drei unterschiedlich langen Pitches aufweisen, welche in den einzelnen Umfangsbereichen verschiedene, daher eigene Umfangslängen aufweisen.

Ausführungsvarianten mit Blockspuren bzw. Profilblockreihen können ebenfalls auf besonders vorteilhafte Weise mit Einschnitten versehen sein. Bei einer dieser Ausführungsvarianten bilden in Umfangsrichtung unmittelbar aufeinanderfolgende Profilpositive jeweils eine Blockspur, wobei der Laufstreifen zumindest ein Paar von Blockspuren aufweist, von welchen je eine Blockspur sich in je einer Laufstreifenhälfte befindet und welche gleiche Einschnittpitchfolgen aufweisen, die sich von den Einschnittpitchfolgen in dem/den weiteren gegebenenfalls vorhandenen Paar(en) von Blockspuren unterscheidet.

Bei einer weiteren vorteilhaften Ausführungsform sind Profilpositive vorhanden, in welchen zumindest ein Einschnitt eine Breite aufweist, die sich von der Breite des weiteren Einschnitts oder der weiteren Einschnitte im Profilpositiv unterscheidet.

Bevorzugt variieren in Profilpositiven, die zu einem bestimmten Pitch gehören, die Positionen von Einschnitten unterschiedlicher Breiten.

Bei sämtlichen Ausführungsvarianten kann die Anzahl unterschiedlich langer Pitches im Laufstreifen bis zu sechs betragen und es können ferner im Laufstreifen Einschnitte mit bis zu sechs unterschiedlichen Breiten vorhanden sein.

Weitere Merkmale, Vorteile und Einzelheiten der Erfindung werden nun anhand der schematischen Zeichnung, die ein Beispiel aus dem Stand der Technik sowie Ausführungsbeispiele der Erfindung schematisch darstellt, näher beschrieben.

### Dabei zeigen

Fig. 1 einen Umfangsabschnitt eines Laufstreifens eines Fahrzeugreifens gemäß dem Stand der Technik,
Fig. 2 bis Fig. 5 Umfangsabschnitte von Laufstreifen eines Fahrzeugreifens mit unterschiedlichen Ausführungsvarianten der Erfindung und
Fig. 2a einen vergrößerten Ausschnitt der Fig. 2.

Fahrzeugreifen gemäß der Erfindung sind Reifen für Kraftfahrzeuge, insbesondere für mehrspurige Kraftfahrzeuge, bevorzugt Winter- oder Ganzjahresreifen für Personenkraftwagen (PKW), Vans (Transporter oder SUVs), sowie vorzugsweise Fahrzeugluftreifen, besonders bevorzugt Fahrzeugluftreifen in Radialbauart. PKW-, Van- und SUV-Reifen sind insbesondere für Felgen mit einem ganzzahligen Felgendurchmesser von 13 Zoll bis 24 Zoll, bevorzugt von 18 Zoll bis 23 Zoll, vorgesehen und weisen einen Traglastindex von 71 bis 126 auf.

Die Figuren zeigen vereinfachte Darstellungen eines mit drei Pitches P₁, P₂ und P₃ unterschiedlicher Umfangslängen I₁, I₂ und I₃ gestalteten Umfangsabschnitts eines Laufstreifens eines Fahrzeugreifens als Abwicklung in die Ebene. Mit B_{L} sind jeweils die beiden seitlichen Ränder der Bodenaufstandsfläche des Laufstreifens bezeichnet. Die Bodenaufstandsfläche entspricht dem statisch ermittelten Footprint, welcher mit einem auf einer Normfelge montierten Reifen bei einer Last bei 70 % der maximalen Tragfähigkeit und einem Innendruck von 85 % des Normdrucks gemäß E.T.R.T.O.- Standards in der jeweils geltenden Fassung ermittelt ist. Die Breite B_{A} der Bodenaufstandsfläche ist daher der in axialer Richtung ermittelte größte Abstand zwischen den beiden seitlichen Rändern B_{L} der Bodenaufstandsfläche

In sämtlichen Beispielen ist jeweils ein Laufstreifen mit einer laufrichtungsgebunden gestalteten Profilierung mit breitenübergreifend, daher über die Breite des Laufstreifens zueinander V-förmig verlaufenden Schrägrillen 1, 1', welche hier die Hauptrillen des Laufstreifens sind. Beim sämtlichen Ausführungsbeispielen münden die Schrägrillen 1 aus der einen Laufstreifenhälfte im Bereich der Laufstreifenmitte in die Schrägrillen 1' aus der anderen Laufstreifenhälfte ein. Die Schrägrillen 1, 1' verlaufen zur Umfangsrichtung des Laufstreifens unter spitzen Winkeln von 30° bis 85°, wobei der Winkel in der Laufstreifenmitte Laufstreifens am kleinsten ist und in Richtung zu den Laufstreifenrändern größer wird. Beim gezeigten Ausführungsbeispiel gliedern in jeder Laufstreifenhälfte zwei weitere zusätzliche Rillen 2, die jeweils in Umfangsrichtung aufeinanderfolgende Schrägrillen 1, 1' miteinander verbinden und sich unter einem spitzen Winkel von 10° bis 30° zur Umfangsrichtung erstrecken, die Profilpositive zwischen den in Umfangsrichtung aufeinanderfolgenden Schrägrillen 1, 1' in zwei schulterseitige Profilblöcke 3, zwei halbmittige Profilblöcke 3' und zwei zentrale Profilblöcke 3".

Die Umfangslängen I₁, I₂ und I₃ der Pitches P₁, P₂, P₃ liegen an den Rändern B_{L} vor bzw. sind dort ermittelt. In den Figuren sind zur besseren optischen Unterscheidung der Pitches P₁, P₂ und P₃ ihre Oberflächen mit unterschiedlichen Strukturen versehen. Jedes Pitch P₁, P₂ und P₃ setzt sich jeweils aus den zwischen den im Umfangsrichtung aufeinanderfolgenden Schrägrillen 1, 1' befindlichen Profilblöcken 3, 3' und 3" und jeweils einem Teilbereich der beiden an diese anschließenden Schrägrillen 1. 1' zusammen. Die Pitchgrenzen sind daher in den Figuren als dünne Linien innerhalb der Schrägrillen 1, 1' eingezeichnet. An den Laufstreifenrändern B_{L} betragen die Umfangslängen dieser beiden Teilbereiche gemeinsam 10 % bis 17 % der Umfangslängen der in Umfangsrichtung aufeinanderfolgenden Pitches. Bei einem bestimmten Laufstreifen ist der Prozentanteil der Teilbereiche bei allen Pitches P₁, P₂ und P₃ konstant, beispielsweise 12 %. Bei einer alternativen Ausführung gehören zu einem Pitch jeweils die Profilblöcke 3, 3' und 3" zwischen zwei in Umfangsrichtung aufeinanderfolgenden Schrägrillen 1, 1' und die jeweils in der gleichen Umfangsrichtung befindlichen kompletten Schrägrillen 1, 1'.

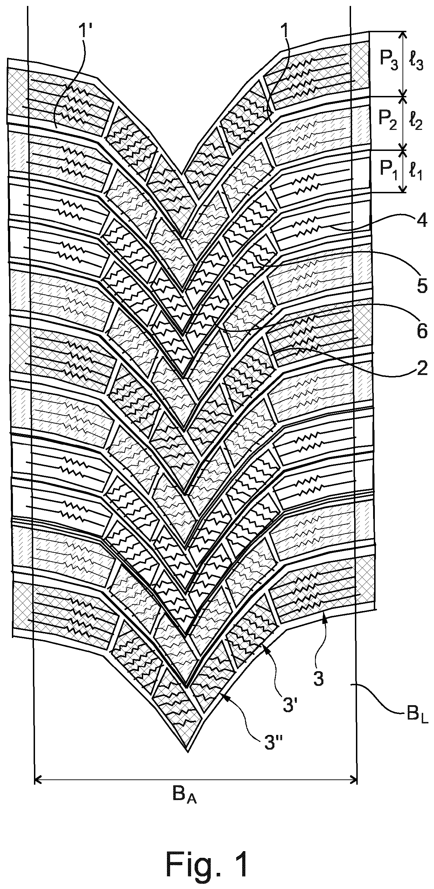

Die Pitches P₁, P₂ und P₃ sind über den Reifenumfang gemäß einer Pitchfolge angeordnet, die rechnerisch ermittelt wird, beispielsweise mit einer üblichen Gesamtanzahl von Pitches über den Reifenumfang von 60 bis 90. In einer Pitchfolge können an mehreren Stellen des Reifenumfangs zwei oder mehr Pitches gleicher Länge aufeinanderfolgen. Bei den in Fig. 1 bis Fig. 5 gezeigten Laufstreifen ist jeweils die gleiche Pitchfolge dargestellt.

Bei einer alternativen, nicht dargestellten Ausführung ist der Laufstreifen über seine Breite in Umfangsbereiche gegliedert, welche den Laufstreifen in Umfangsrichtung umlaufen und beispielsweise die Laufstreifenhälften, Profilblockreihen, auch solche mit Doppelblöcken, oder Profilrippen mit blockartiger Strukturierung sind. In jedem derartigen Umfangsbereich kann eine eigene, separate Pitchfolge vorhanden sein, insbesondere aus zumindest drei unterschiedlich langen Pitches zusammengesetzt, die in jedem Umfangsbereich verschiedene, daher eigene Umfangslängen aufweisen.

In sämtlichen dargestellten Beispielen sind in den schulterseitigen Profilblöcken 3 Einschnitte 4, in den halbmittigen Profilblöcken 3' Einschnitte 5 und in den zentralen Profilblöcken 3" Einschnitte 6 enthalten, die sich jeweils parallel zueinander erstrecken. Die Einschnitte 4, 5 und 6 durchqueren bei den gezeigten Beispielen die Profilblöcke 3, 3' und 3", verlaufen in Draufsicht zumindest abschnittsweise wellen- bzw. zickzackförmig und weisen an der Laufstreifenperipherie eine vorzugsweise konstante Breite von 0,30 mm bis 1,50 mm, insbesondere bis 1,00 mm, auf. Sämtliche Einschnitte 4, 5 und 6 erstrecken sich zur axialen Richtung unter einem Winkel ≤ 40°, wobei die Einschnitte 4 in den schulterseitigen Profilblöcken 3 sich parallel zu den Abschnitten der Schrägrillen 1,1' zwischen den schulterseitigen Profilblöcken 3 erstrecken. In den halbmittigen Profilblöcken 3' und in den zentralen Profilblöcken 3" erstrecken sich die Einschnitte 5 und 6 gegensinnig zum Verlauf der Schrägrillen 1, 1'.

In den dargestellten Beispielen beträgt in den schulterseitigen Profilblöcken 3 die Anzahl der Einschnitte 4 in Pitches P₃ mit der längsten Umfangslänge I₃ vier, in den zu einem Pitch P₂ mit der Umfangslänge I₂ gehörenden Profilblöcken 3' befinden sich drei Einschnitte 4 und in den Pitches P₃ mit der kleinsten Umfangslänge I₃ jeweils zwei Einschnitte 4. In den halbmittigen Profilblöcken 3' beträgt die Anzahl der Einschnitte 5 beispielhaft sechs oder sieben, in den zentralen Profilblöcken 3" beträgt die Anzahl der Einschnitte 6 fünf. Sämtliche Einschnitte 4, 5 und 6 können ferner eine Tiefe aufweisen, die der üblichen Einschnitttiefe entspricht und auf übliche Weise über den Verlauf bzw. die Erstreckung der Einschnitte, auch abschnittsweise, unterschiedlich sein kann.

Bei dem in Fig. 1 gezeigten Ausführungsbeispiel gemäß dem Stand der Technik weisen sämtlich Einschnitte 4, 5 und 6 gleiche Breiten auf.

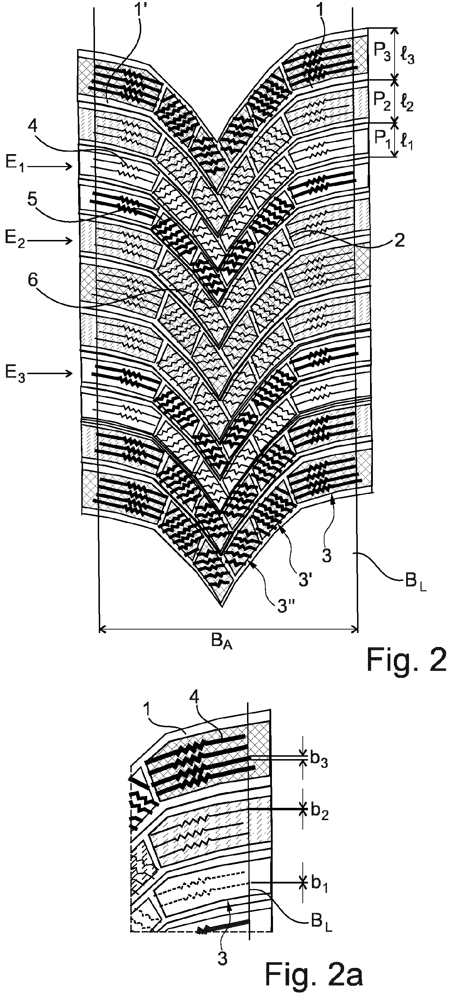

Bei den Ausführungsbeispielen gemäß der Erfindung sind die Einschnitte 4, die Einschnitte 5 und die Einschnitte 6 jeweils in drei unterschiedlichen Breiten b₁, b₂ und b₃ vorgesehen, wie in Fig 2a anhand von drei in Umfangsrichtung aufeinanderfolgenden Profilblöcken 3 gezeigt ist. Die Einschnitte mit der geringsten Breite b₁ weisen beispielsweise eine Breite von 0,40 mm, die Einschnitte mit der mittleren Breite b₂ beispielsweise eine Breite von 0,60 mm und die Einschnitte mit der größten Breite b₃ beispielsweise eine Breite von 0,80 mm auf. Dabei ist die Breite b₁ um mindestens 0,10 mm kleiner als die Breite b₂, welche wiederum um mindestens 0,10 mm geringer ist als die Breite b₃.

Bei den in Fig. 2 bis Fig. 4 gezeigten Ausführungsformen sind Einschnittpitches und deren Anordnung gemäß einer oder mehrerer Einschnittpitchfolge(n) vorhanden, wobei die Einschnittpitchfolge bzw. die Einschnittpitchfolgen im jeweils gezeigten Umfangsabschnitt von oben nach unten betrachtet wird bzw. werden.

Bei der in Fig. 2 gezeigten Ausführungsform ist die Breite der Einschnitte 4, 5 und 6 in den Profilblöcken 3, 3', 3" innerhalb der Pitches P₁, P₂ und P₃ jeweils gleich groß. Es gibt somit Pitches P₁, welche ausschließlich Einschnitte 4, 5 und 6 mit der Breite b₁, mit der Breite b₂ oder mit der Breite b₃ aufweisen. Analoges gilt für die Pitches P₂ und P₃. Ein Einschnittpitch E1 bilden die Profilblöcke 3, 3', 3" mit Einschnitten 4, 5, 6 der Breite b₁ innerhalb eines Pitch P₁, P₂, P₃, ein Einschnittpitch E2 bilden die Profilblöcke 3, 3', 3" mit Einschnitten 4, 5, 6 der Breite b₂ innerhalb eines Pitch P₁, P₂, P₃, ein Einschnittpitch E3 bilden die Profilblöcke 3, 3', 3" mit Einschnitten 4, 5, 6 der Breite b₃ innerhalb eines Pitch P₁, P₂, P₃. In Fig. 2 befinden sich in den Pitches P1, P2 und P3 jeweils entweder nur Einschittpitches E1 oder E2 oder E3. Aus der Aufeinanderfolge in Umfangsrichtung ergibt sich eine Einschnittpitchfolge. Der in Fig. 2 gezeigte Umfangsabschnitt enthält den sich in Umfangsrichtung wiederholenden Teil der Einschnittpitchfolge: E3 E2 E1 E3 E1 E2 E1 E3 E2 E3 E3.

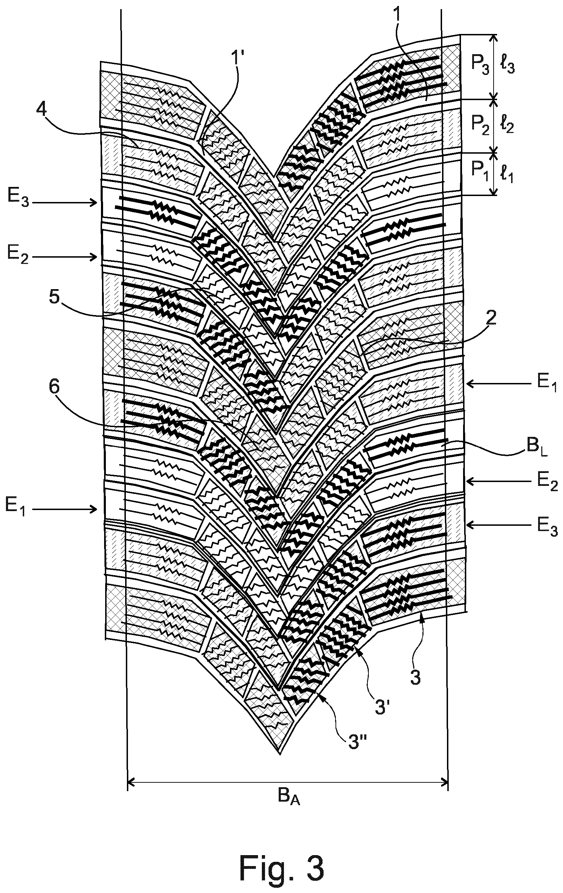

Bei der in Fig. 3 gezeigten Ausführung ist in den Pitches P₁, P₂ und P₃ die Einschnittpitchfolge in der linken Laufstreifenhälfte von jener in der rechten Laufstreifenhälfte verschieden. In jeder Laufstreifenhälfte bilden die Profilblöcke 3, 3' und 3", je nach der Breite ihrer Einschnitte 4, 5 und 6, Einschnittpitches E1', E2' und E3'. Dabei ist jeweils ein zentraler Profilblock 3", ein halbmittiger Profilblock 3' und ein schulterseitiger Profilblock 3 in jedem Pitch P1, P2 und P3 einer der beiden Laufstreifenhälften zugeordnet. In den Profilblöcken 3. 3', 3" in jeder Laufstreifenhälfte und in jedem Pitch P₁, P₂, P₃ befinden sich jeweils Einschnitte 4, 5 oder 6 mit gleicher Breite b₁, b₂ und b₃. Beim gezeigten Ausführungsbeispiel und im gezeigten Umfangsabschnitt lautet der sich in Umfangsrichtung wiederholende Teil der Einschnittpitchfolge in der rechten Laufstreifenhälfte: E3' E2' E1' E3' E1' E2' E1' E3' E2' E3' E3', in der linken Laufstreifenhälfte: E2' E1' E3' E2' E3' E1' E3' E2' E1' E2' E1'.

Bei einer zu Fig. 3 alternativen Ausführung entspricht die Einschnittpitchfolge in der rechten Laufstreifenhälfte jener in der linken Laufstreifenhälfte, wobei die beiden Einschnittpitchfolge in der einen Laufstreifenhälfte gegenüber jener in der zweiten Laufstreifenhälfte in Umfangsrichtung versetzt ist.

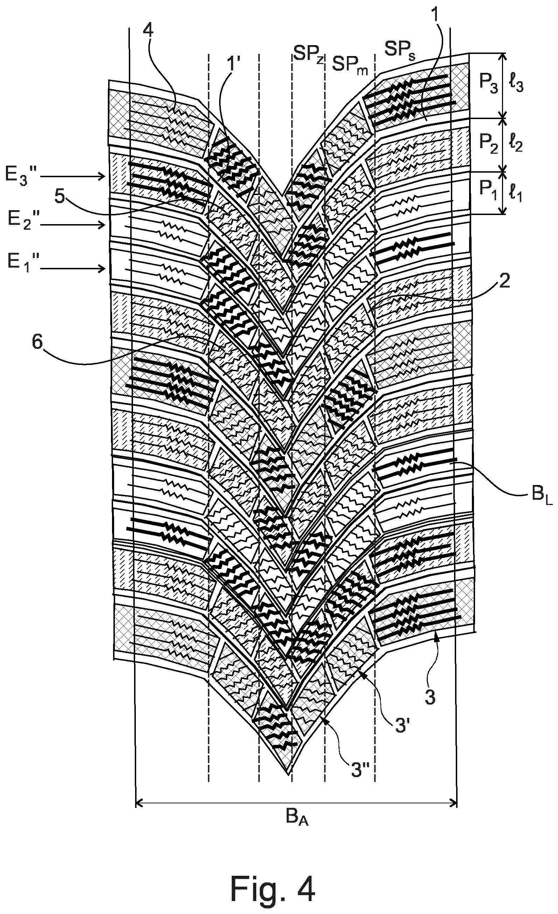

Bei der in Fig. 4 gezeigten Ausführungsvariante sind über den Laufstreifenumfang den in Umfangsrichtung aufeinanderfolgenden Profilblöcken 3, den Profilblöcken 3' und den Profilblöcken 3" jeweils Blockspuren (Profilblockreihen) zugeordnet, es gibt daher zwei schulterseitige Blockspuren SPₛ, zwei halbmittige Blockspuren SPₘ und zwei zentrale Blockspuren SP_{z}. Die Grenzen zwischen den Blockspuren SPₛ, SPₘ und SP_{z} sind mit gestrichelten Linien eingezeichnet. Ein Einschnittpitch E1" enthält einen Profilblock 3, 3', 3" mit Einschnitten 4, 5, 6 der Breite b₁, ein Einschnittpitch E2" enthält einen Profilblock 3, 3', 3" mit Einschnitten 4, 5, 6 der Breite b₂, ein Einschnittpitch E3" enthält einen Profilblock 3, 3', 3" mit Einschnitten 4, 5, 6 der Breite b₃. In jeder Blockspur SPₛ, SPₘ und SP_{z} ist eine eigene Einschnittpitchfolge vorhanden, die sich von sämtlichen Einschnittpitchfolgen in den anderen Blockspuren SPₛ, SPₘ und SP_{z} unterscheidet. So lautet beispielsweise der sich in Umfangsrichtung wiederholende Teil der Einschnittpitchfolge in der linken schulterseitigen Blockspur SPₛ: E1" E3" E2" E1" E2" E3" E2" E1" E3" E1" E1", in der rechten schulterseitigen Blockspur SPₛ: E3" E2" E1" E3" E1" E2" E1" E3" E2" E3" E3".

Bei einer alternativen, nicht dargestellten Ausführung stimmen die Einschnittpitchfolgen in den beiden schulterseitigen Blockspuren SPₛ, in den beiden halbmittigen Blockspuren SPₘ und in den beiden zentralen Blockspuren SP_{z} jeweils überein. Zusätzlich können die beiden Blockspuren SPₛ, SPₘ und SP_{z} in Umfangsrichtung zueinander versetzt sein.

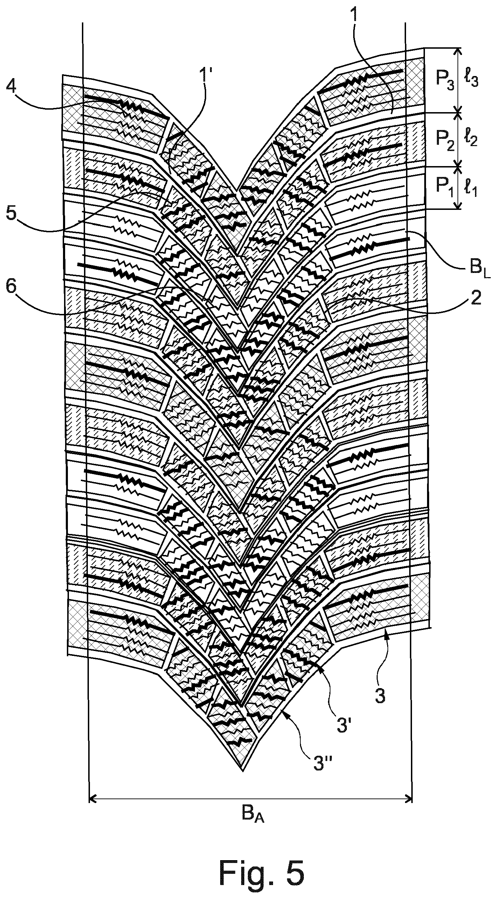

Fig. 5 zeigt eine Ausführungsvariante bei welcher die Anzahl der Einschnitte 4, 5 und 6 in den Profilblöcken 3, 3' und 3" der Pitches P1, P2 und P3 jeweils gleich ist, beispielsweise und wie dargestellt in den Profilblöcken 3 der Pitches P₁ jeweils 2, in den Profilblöcken 3 der Pitches P₂ jeweils 3 und den Profilblöcken 3 der Pitches P₃ jeweils 4 beträgt. Variiert wird die Breite der Einschnitte 4, 5 und 6 derart, dass beispielsweise in den Profilblöcken 3 der Pitches P₁ beide Einschnitte 4 entweder die gleiche Breite b₁, b₂ oder b₃ aufweisen oder zumindest ein Einschnitt 4, 5 oder 6 eine Breite aufweist, die sich von der Breite des weiteren Einschnitts bzw. der weiteren Einschnitte im Profilblock 3 unterscheidet. Darüber hinaus ändern sich die Positionen der unterschiedlich breiten Einschnitte in den Profilblöcken 3, sodass es beispielsweise Profilblöcke 3 gibt, die sich im Pitch P₃ befinden und bei welchen ein Einschnitt 4 der Breite b₃ ein blockrandseitiger Einschnitt oder ein mittlerer Einschnitt ist.

### Bezugszeichenliste

- 1, 1': Schrägrille
- 2: Rille
- 3, 3', 3": Profilblock
- 4, 5, 6: Einschnitt
- b₁, b₂, b₃: Breite
- B_{A}: Breite Bodenaufstandsfläche
- B_{L}: seitlicher Rand der Bodenaufstandsfläche
- E1, E2, E3: Einschnittpitch
- E1', E2', E3': Einschnittpitch
- E1", E2", E3": Einschnittpitch
- I₁, I₂, I₃: Umfangslänge
- P₁, P₂, P₃: Pitch
- SPₛ, SPₘ: Blockspur
- SP_{z}: Blockspur

## Patentansprüche

1. Fahrzeugreifen mit einem Laufstreifen mit einem oder mehreren in Umfangsrichtung umlaufenden und Profilpositive aufweisenden Umfangsbereich(en), beispielsweise mit Profilblöcken (3, 3', 3") oder blockartigen Strukturen, wobei jedem Umfangsbereich Pitches (P₁, P₂, P₃) mit zumindest einer längeren und zumindest einer gegenüber dieser unterschiedlichen kürzeren Umfangslänge (I₁, I₂, I₃) zugeordnet sind, wobei die Pitches (P₁, P₂, P₃) über den Reifenumfang gemäß einer Pitchfolge aufeinanderfolgen, welche rechnerisch ermittelt wird,
wobei die Profilpositive jeweils mit mehreren Einschnitten (4, 5, 6), die sich zur axialen Richtung unter einem Winkel ≤ 40° erstrecken, versehen sind,
wobei die Einschnitte (4, 5, 6) mit einer kleinsten Breite (b₁), zumindest einer mittleren Breite (b₂) und mit einer größten Breite (b₃), jeweils aus einem Breitenbereich von 0,30 mm bis 1,50 mm, vorhanden sind,
**dadurch gekennzeichnet,**
**dass** in Pitches (P₃) mit einer längeren Umfangslänge (I₃) Profilpositive vorhanden sind, die zumindest einen Einschnitt (4, 5, 6) mit der kleinsten oder einer/der mittleren Breite (b₁, b₂) enthalten und in Pitches (P₁) mit einer gegenüber der längeren Umfangslänge kürzeren Umfangslänge (I₁) Profilpositive vorhanden sind, die zumindest einen Einschnitte (4, 5, 6) mit der größten oder einer/der mittleren Breite (b₂, b₃) enthalten.

2. Fahrzeugreifen nach Anspruch 1, **dadurch gekennzeichnet, dass** Profilpositive, die Pitches (P₁, P₂, P₃) gleicher Umfangslänge (I₁, I₂, I₃) zugeordnet sind, jeweils eine übereinstimmende Anzahl von Einschnitten (4, 5, 6) enthalten.

3. Fahrzeugreifen nach Anspruch 1 oder 2, **dadurch gekennzeichnet, dass** in Pitches (P₃) mit der längsten Umfangslänge (I₃) Profilpositive vorhanden sind, die Einschnitte (4, 5, 6) mit der kleinsten Breite (b₁) enthalten und in Pitches (P₁) mit der kürzesten Umfangslänge (I₁) Profilpositive vorhanden sind, die Einschnitte (4, 5, 6) mit der größten Breite (b₃) enthalten.

4. Fahrzeugreifen nach einem der Ansprüche 1 bis 3, **dadurch gekennzeichnet, dass** in Pitches (P₁, P₂, P₃) mit einer bestimmten Umfangslänge (I₁, I₂, I₃) Profilpositive vorhanden sind, welche ausschließlich Einschnitte (4, 5, 6) mit der kleinsten Breite (b₁), mit der oder einer mittleren Breite (b₂) oder mit der größten Breite (b₃) aufweisen.

5. Fahrzeugreifen nach einem der Ansprüche 1 bis 4, **dadurch gekennzeichnet, dass** Profilpositive innerhalb von Pitches (P₁, P₂, P₃) mit einer bestimmten Umfangslänge (I₁, I₂, I₃) ausschließlich Einschnitte (4, 5, 6) mit der kleinsten Breite (b₁) oder einer mittleren Breite (b₂) oder mit der größten Breite (b₃) aufweisen.

6. Fahrzeugreifen nach einem der Ansprüche 1 bis 5, **dadurch gekennzeichnet, dass** ein Profilpositiv oder mehrere Profilpositive, die ausschließlich Einschnitte (4, 5, 6) einer bestimmten Breite (b₁, b₂, b₃) enthalten, ein dieser Einschnittbreite (b₁, b₂, b₃) zugeordnetes Einschnittpitch (E1, E2, E3, E1', E2', E3', E1", E2", E3") bilden, wobei die Aufeinanderfolge der unterschiedlichen Einschnittpitches (E1, E2, E3, E1', E2', E3', E1", E2", E3") über den Umfang des/jedes Umfangsbereichs des Laufstreifens gemäß einer Einschnittpitchfolge erfolgt, die von der Pitchfolge der Pitches (P₁, P₂, P₃) unabhängig ist.

7. Fahrzeugreifen nach Anspruch 6, **dadurch gekennzeichnet, dass** der Laufstreifen einen einzigen, über die Breite des Laufstreifens verlaufenden Umfangsbereich aufweist, wobei die Profilpositive in jeder Laufstreifenhälfte jeweils Einschnittpitches (E1', E2', E3') bilden, wobei die Einschnittpitches (E1', E2', E3') in den beiden Laufstreifenhälften über den Umfang des Laufstreifens jeweils gemäß einer Einschnittpitchfolge aufeinander folgen.

8. Fahrzeugreifen nach Anspruch 7, **dadurch gekennzeichnet, dass** die in den beiden Laufstreifenhälften vorhandenen Einschnittpitchfolgen voneinander verschieden sind oder dass die in den beiden Laufstreifenhälften vorhandenen Einschnittpitchfolgen gleich sind, wobei die Einschnittpitchfolge in der einen Laufstreifenhälfte gegenüber jener in der anderen Laufstreifenhälfte in Umfangsrichtung versetzt ist.

9. Fahrzeugreifen nach einem der Ansprüche 1 bis 6, **dadurch gekennzeichnet, dass** der Laufstreifen mehrere in Umfangsrichtung umlaufende Umfangsbereiche aufweist, in welchen in Umfangsrichtung unmittelbar aufeinanderfolgende Profilpositive jeweils eine Blockspur (SPₛ, SPₘ, SP_{z}) bilden, wobei der Laufstreifen zumindest zwei Blockspuren (SPₛ, SPₘ, SP_{z}) aufweist, wobei in jeder Blockspur (SPₛ, SPₘ, SP_{z}) eine Einschnittpitchfolge vorhanden ist, die sich von sämtlichen Einschnittpitchfolgen in den anderen Blockspuren (SPₛ, SPₘ, SP_{z}) unterscheidet.

10. Fahrzeugreifen nach Anspruch 9, **dadurch gekennzeichnet, dass** zumindest zwei Umfangsbereiche, insbesondere sämtliche Umfangsbereiche, eine eigene, separate Pitchfolge aus zumindest drei unterschiedlich langen Pitches aufweisen, die in den Umfangsbereichen verschiedene, daher eigene Umfangslängen aufweisen.

11. Fahrzeugreifen nach einem der Ansprüche 1 bis 6, **dadurch gekennzeichnet, dass** in Umfangsrichtung unmittelbar aufeinanderfolgende Profilpositive jeweils eine Blockspur bilden, wobei der Laufstreifen zumindest ein Paar von Blockspuren (SPₛ, SPₘ, SP_{z}) aufweist, von welchen je eine Blockspur sich in je einer Laufstreifenhälfte befindet und welche gleiche Einschnittpitchfolgen aufweisen, die sich von den Einschnittpitchfolgen in dem/den weiteren ggf. vorhandenen Paar(en) von Blockspuren (SPₛ, SPₘ, SP_{z}) unterscheidet.

12. Fahrzeugreifen nach Anspruch 1, **dadurch gekennzeichnet, dass** Profilpositive vorhanden sind, in welchen zumindest ein Einschnitt (4, 5, 6) eine Breite (b₁, b₂, b₃) aufweist, die sich von der Breite (b₁, b₂, b₃) des weiteren Einschnitts (4, 5, 6) oder der weiteren Einschnitte (4, 5, 6) im Profilpositiv unterscheidet.

13. Fahrzeugreifen nach Anspruch 12, **dadurch gekennzeichnet, dass** in Profilpositiven, die zu einem bestimmten Pitch (P₁, P₂, P₃) gehören, die Positionen von Einschnitten (4, 5, 6) unterschiedlicher Breiten (b₁, b₂, b₃) variieren.

14. Fahrzeugreifen nach einem der Ansprüche 1 bis 13, **dadurch gekennzeichnet, dass** die Breiten (b₁, b₂, b₃) der unterschiedlich breiten Einschnitte (4, 5, 6) sich um mindestens 0,10 mm voneinander unterscheiden.

15. Fahrzeugreifen nach einem der Ansprüche 1 bis 14, **dadurch gekennzeichnet, dass** die Anzahl unterschiedlich langer Pitches im Laufstreifen bis zu sechs beträgt und/oder dass im Laufstreifen Einschnitte mit bis zu sechs unterschiedlichen Breiten vorhanden sind.
